# EUROPEAN PATENT SPECIFICATION

(11) **EP 3 517 394 B1**
(45) Date of publication and mention of the grant of the patent: **15.09.2021**
(21) Application number: 17876138.3
(22) Date of filing: 30.09.2017
(51) Int. Cl.: B61D 27/00

(54) **AIR CONDITIONER PLATFORM STRUCTURE AND VEHICLE HAVING SAME**
AUFBAU EINER KLIMATISIERUNGSPLATTFORM UND FAHRZEUG DAMIT
STRUCTURE DE PLATEFORME DE CLIMATISEUR ET VÉHICULE LA COMPRENANT

(30) Priority: 01.12.2016 CN 201611093214
(43) Date of publication of application: 31.07.2019
(73) Proprietor: CRRC Qingdao Sifang Co., Ltd., Qingdao, Shandong 26611 (CN)
(72) Inventor: LI, Yang, Qingdao Shandong 266111 (CN); GU, Chunlei, Qingdao Shandong 266111 (CN); TAI, Yongfeng, Qingdao Shandong 266111 (CN); HU, Yingcan, Qingdao Shandong 266111 (CN); TIAN, Honglei, Qingdao Shandong 266111 (CN); ZHONG, Yuanmu, Qingdao Shandong 266111 (CN); DING, Sansan, Qingdao Shandong 266111 (CN); LIU, Yuwen, Qingdao Shandong 266111 (CN); LIANG, Jianying, Qingdao Shandong 266111 (CN); TAO, Guidong, Qingdao Shandong 266111 (CN); TIAN, Aiqin, Qingdao Shandong 266111 (CN)
(74) Representative: Fioravanti, Corrado
(86) International application number: PCT/CN2017/104830
(87) International publication number: WO 2018/099181

(56) References cited:
- CN-A- 103 612 641
- CN-A- 104 709 301
- CN-A- 104 709 303
- CN-A- 105 292 154
- CN-A- 106 740 935
- CN-U- 202 115 527
- CN-U- 202 294 836
- CN-U- 204 472 804
- CN-U- 204 548 125
- JP-A- H04 228 319
- JP-A- 2012 250 703
- US-A1- 2014 250 800

## Description

### Technical Field

The disclosure relates to a field of vehicles, and in particular to an air conditioner platform structure and a vehicle with the air conditioner platform structure.

### Background

In a related subway, a subway air conditioner platform is of a complex structure, a water drainage device needs to be independently mounted, and thus the overall weight of the subway is increased.

In addition, a related air conditioner mounting base is an independent small base, the air conditioner mounting base is mounted on a platform in an electric arc welding mode, large material welding deformation may be caused by great welding workloads, and overall planeness of mounting bases is hard to ensure.

Documents CN104709303 A and CN 204548125 U provide a roof of a rail vehicle and an air conditioner mounting seat of the roof of the rail vehicle, the roof of the rail vehicle can realize the sinking mounting of the air conditioner, reduce the influence on the streamline structure of the roof, further reduce air resistance and aerodynamic noise, and improve the aerodynamic performance of the train. The air conditioner mounting seat is provided on the roof of a rail vehicle, the air conditioner mounting seat is arranged in a square structure, the middle cavity of the square structure is used for accommodating air conditioners, four sides of the square structure are side beams made of hollow profiles, the inner side of the side beams is provided with an air conditioner mounting position, the outer side can be spliced and welded with the hollow profile of the roof, and the top surface of the side beams is provided with an arc shape matched with the roof. The middle cavity of the box structure is used for accommodating the cavity, so that the whole air conditioner is built in the roof without protruding from the roof, thus realizing the "sinking" installation of the air conditioner, effectively reducing the influence of the installation of the air conditioner on the roof streamline structure, further reducing air resistance and aerodynamic noise, and improving the aerodynamic performance of the train.

### Summary

The invention provides an air conditioner platform structure and a vehicle with the air conditioner platform structure, solving the problem that a subway air conditioner platform structure in the related art has a large weight.

To achieve the purpose, the invention is defined by the features of claim1, providing an air conditioner platform structure, the air conditioner platform structure comprising a platform main body for mounting an air conditioner, wherein the platform main body comprises a plurality of beam bodies, and the plurality of beam bodies are spliced in sequence in a circumferential direction along the platform main body to form a frame structure for supporting the air conditioner; wherein Z the plurality of beam bodies Z comprise two mounting beams, the two mounting beams are oppositely provided, and the two mounting beams are used for supporting the air conditioner; the plurality of beam bodies further comprise an end beam, and the end beam is provided between the two mounting beams; wherein the plurality of beam bodies comprise a waterproof plate for forming a waterproof groove, and the waterproof plate is provided on an inner side of the end beam.

In an exemplary embodiment, two end beams are provided, and one end beam in the two end beams is connected to one end of each of the two mounting beams, the other end beam is connected to the other end of the each of the two mounting beams.

In an exemplary embodiment, the plurality of beam bodies include a first reinforcing beam, and an outer side of at least one of the two end beams has the first reinforcing beam.

In an exemplary embodiment, each of the two end beam includes a vertical plate part and a transverse plate part which are mutually connected, a part of beam body of the first reinforcing beam is connected with the vertical plate part, and a part of beam body of the first reinforcing beam is connected with the transverse plate part.

In an exemplary embodiment, the end beam includes a vertical plate part and a transverse plate part which are mutually connected, a baffle plate part is provided on the transverse plate part, the baffle plate part is provided parallel to the vertical plate part, the waterproof plate is provided on the transverse plate part, and the waterproof groove is surrounded by the waterproof plate, the transverse plate part and the baffle plate part.

In an exemplary embodiment, the plurality of beam bodies further include two side beams, each of the two side beams is provided on a corresponding mounting beam of the two mounting beams, an extension direction of the each of the two side beams is identical to an extension direction of the corresponding mounting beam, and a rectangular frame used for connecting with a vehicle body is surrounded by two end beams and the two side beams.

In an exemplary embodiment, the plurality of beam bodies further include a second reinforcing beam, the second reinforcing beam is provided on a side far away from a corresponding mounting beam in the two mounting beams, of each of the two side beams, and an extension direction of the second reinforcing beam is identical to an extension direction of the side corresponding beam.

Another embodiment of the present disclosure provided a vehicle, the vehicle includes a vehicle body and an air conditioner platform structure provided on the vehicle body, and the air conditioner platform structure being the above air conditioner platform structure.

As the platform main body of the air conditioner platform structure is of a frame structure spliced by the plurality of beam bodies, the structure of an air conditioner platform is simplified, lightening of the air conditioner platform is achieved, the platform main body is also prevented from a ponding phenomenon, and the problem that the air conditioner platform structure of a subway in the related art has a large weight is solved.

### Brief Description of the Drawings

A part of drawings of the disclosure are provided to further understand the disclosure, and schematic embodiments and description are adopted not to limit the disclosure but only to explain the disclosure. In the drawings:
Fig. 1 illustrates a structure diagram of an air conditioner platform structure according to an embodiment of the disclosure;
Fig. 2 illustrates a top view of the air conditioner platform structure of Fig. 1 ;
Fig. 3 illustrates a section view A-A of the air conditioner platform structure of Fig. 2;
Fig. 4 illustrates a mounting schematic diagram of a section view B-B of the air conditioner platform structure of Fig. 2;
Fig. 5 illustrates a partial view of the air conditioner platform structure of Fig. 3.

Herein, the drawings include the following drawing markers:
10: platform main body; 20: mounting beam; 30: end beam; 31: vertical plate part; 32: transverse plate part; 33: baffle plate part; 40: first reinforcing beam; 50: waterproof plate; 51: waterproof groove; 60: side beam; 70: second reinforcing beam.

### Detailed Description of the Embodiments

It needs to be noted that embodiments and characteristics of the embodiments of the disclosure may by mutually combined without confliction, and the disclosure is described in details with the drawings and the embodiments.

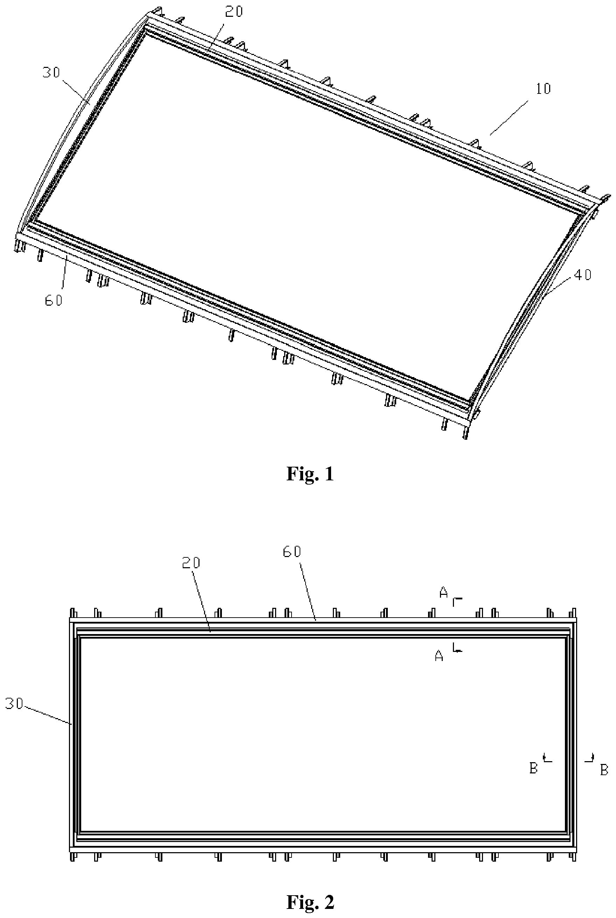

Some embodiments of the present disclosure provide an air conditioner platform structure. As shown in Fig. 1 to Fig. 4, the air conditioner platform structure includes a platform main body 10 for mounting an air conditioner, the platform main body 10 includes plurality of beam bodies, and the plurality of beam bodies are spliced in sequence in a circumferential direction along the platform main body 10 to form a frame structure for supporting the air conditioner.

As the platform main body 10 of the air conditioner platform structure of the disclosure is of a frame structure spliced by the plurality of beam bodies, the structure of an air conditioner platform is simplified, lightening of the air conditioner platform is achieved, the platform main body 10 is also prevented from a ponding phenomenon, and the problem that the air conditioner platform structure of a subway in the related art has a large weight is solved.

In an exemplary embodiment, as shown in Fig. 1 to Fig, 3, the plurality of beam bodies include two mounting beams 20, the two mounting beams 20 are oppositely provided, and the two mounting beams 20 are used for supporting the air conditioner. The air conditioner may be conveniently supported by providing the mounting beams 20.

In addition, the plurality of beam bodies further include an end beam 30, and the end beam 30 is provided between the two mounting beams 20. In this way, the two opposite mounting beams 20 are connected by the end beams 30.

In an exemplary embodiment, two end beams 30 are provided, and one end beam 30 in the two end beams 30 is connected to one end of each of the two mounting beams 20, the other end beam 30 is connected to the other end of the each of the two mounting beams 20. In this way, the two mounting beams 20 and the two end beams 30 form a rectangular frame structure. The end beams 30 are connected with a top plate of a vehicle body.

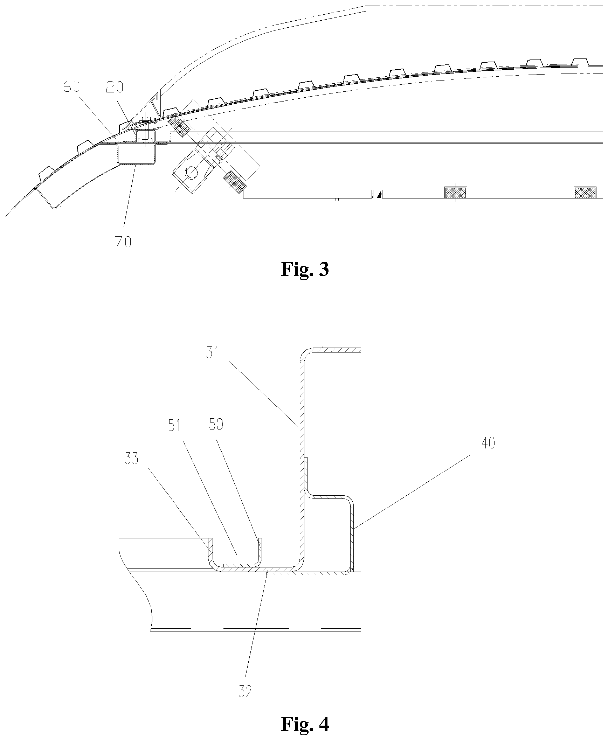

To improve the strength of the end beams 30, as shown in Fig. 1 and Fig. 4, the plurality of beam bodies include a first reinforcing beam 40, and an outer side of at least one of the two end beams 30 has the first reinforcing beam 40. In this way, the outer side of the end beam 30 refers to a side far away from the other end beam 30 of the two end beams 30.

In an exemplary embodiment, each of the end beams 30 includes a vertical plate part 31 and a transverse plate part 32 which are mutually connected, a part of beam body of the first reinforcing beam 40 is connected with the vertical plate part 31, and a part of beam body of the first reinforcing beam 40 is connected with the transverse plate part 32. In an exemplary embodiment, the vertical plate part 31 and the transverse plate part 32 of the end beam 30 form an L-shaped structure, the transverse plate part 32 is positioned on an inner side of the vertical plate part 31. The first reinforcing beam 40 is a bent plate, the first reinforcing beam 40 is composed of a first L-shaped plate and a second L-shaped plate, a first plate section of the first L-shaped plate is connected with the vertical plate part 31, a second plate section of the first L-shaped plate extends in a direction far away from the vertical plate part 31, a first plate section of the second L-shaped plate is connected with the second plate section of the first L-shaped plate, and a second plate section of the second L-shaped plate is connected with the transverse plate part 32.

To achieve a waterproof function, as shown in Fig. 4, the plurality of beam bodies further include a waterproof plate 50 for forming a waterproof groove 51, and the waterproof plate 50 is provided on an inner side of the end beam 30. That is, the waterproof plate 50 is provided on a side close to the other end beam 30 of the end beam 30.

The plurality of beam bodies include two waterproof plates 50, each of the two waterproof plates 50 is provided on the inner side of the corresponding end beam 30 in the two end beams 30.

In an exemplary embodiment, the end beams 30 include a vertical plate part 31 and a transverse plate part 32 which are mutually connected, a baffle plate part 33 is provided on the transverse plate part 32, the baffle plate part 33 is provided parallel to the vertical plate part 31, the waterproof plate 50 is provided on the transverse plate part 32, and the waterproof groove is surrounded by the waterproof plate 50, the transverse plate part 32 and the baffle plate part 33. Therefore, accumulated water is deposited into the waterproof grooves 51 and is prevented from damaging the air conditioner in the frame structure.

To ensure a connecting effect of the air condition platform structure with the vehicle body, the plurality of beam bodies further include two side beams 60, each of the two side beams 60 is provided on a corresponding mounting beam 20 in the two mounting beams, an extension direction of the each of the two side beams 60 is identical to an extension direction of the corresponding mounting beam 20, and a rectangular frame used for connecting with a vehicle body is surrounded by two end beams 30 and the two side beams 60. In the rectangle frame, the side beams 60 form long sides of the rectangular frame. In an exemplary embodiment, each of the two side beams 60 is provided on an outer side of the corresponding mounting beams 20, then the side beams 60 are conveniently connected with the top plate of the vehicle body, and the air conditioner is well supported by the mounting beams 20.

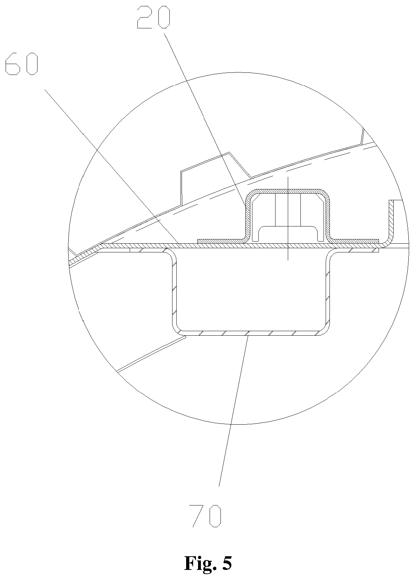

Fig. 5 illustrates a partial view of the air conditioner platform structure of Fig. 3.

To improve the strength of the side beams 60, as shown in Fig. 3 and Fig. 5, the plurality of beam bodies further include a second reinforcing beam 70, the second reinforcing beam 70 is provided on a side far away from a corresponding mounting beams 20, in the two mounting beams, of each of the two side beams 60, and an extension direction of the second reinforcing beam 70 is identical to an extension direction of the side beam 60. In an exemplary embodiment, the second reinforcing beam 70 is provided on a side far away from the corresponding mounting beam 20 of the two mounting beams 20, of the corresponding side beam 60 of the two side beams 60. In an exemplary embodiment, the second reinforcing beam 70 and the mounting beam 20 are both of "JL"-shaped, that is, each of the second reinforcing beams 70 and the mounting beams 20 includes a U-shaped plate and connecting plates which are provided at two ends of the opening of the U-shaped plate, and the two connecting plates extend in a direction far away from the opening of the U-shaped plate.

Some embodiments of the present disclosure further provide a vehicle, the vehicle includes a vehicle body and an air conditioner platform structure which is provided on the vehicle body, and the air conditioner platform structure being above the air conditioner platform structure.

The air conditioner platform structure disclosed by the scheme of the disclosure mainly consists of stainless steel rollers and stamping parts in a resistance electric welding manner, a small amount of components are used, a structure of a air conditioner platform in related art is simplified, and the weight is reduced.

The air conditioner platform is of a frame holding structure consisting of components such as end beams, cap-shaped mounting beams, and cap-shaped reinforcing beams in a resistance spot welding manner, the platform mainly adopts the resistance spot welding, then small welding deformation is caused, cap-shaped beam holding structures are used at main holding parts, and high rigidity and strength may be achieved.

The air conditioner end beams and the reinforcing beams are welded in a resistance spot welding manner to form an air conditioner end top, and air conditioner side beams, air conditioner mounting beams and the reinforcing beams are welded in the resistance spot welding manner, so that welding deformation is reduced, and straightness and planeness of the air conditioner mounting beams are ensured; due to a structure of the two cap-shaped reinforcing beams, strength and rigidity of the air conditioner platform are improved. In addition, air conditioner mounting sliding blocks are pre-mounted in the air conditioner mounting beams, and later air conditioner mounting is facilitated. After the waterproof plates are welded with the end beams, sealed mounting grooves are formed in an air conditioner inner frame, and thus sealing performance is ensured after the air conditioner is mounted.

The air conditioner platform structure of some embodiments of the disclosure has the following advantages:
1. Compared with the air conditioner platform in related, the structure of an embodiment in the present disclosure is simple, and lightening is achieved;
2. Due to adoption of a non-sunk bearing structure, the platform has no water ponding, so that no water drainage tube needs to be independently provided, and the construction process is simple;
3. The air conditioner mounting base is mounted in a mode which is completely different from a mode in related art, and an overall cap-shaped mounting beam is provided on the platform, so that the planeness of a mounting surface is easily ensured, and meanwhile, due to the cap-shaped mounting beam, the rigidity and the strength of the air conditioner platform are very well improved;
4. A sliding block is pre-mounted in the air conditioner mounting beam, and thus later air conditioner mounting is facilitated;
5. After the overall platform is welded, a platform inner frame forms a closed mounting groove which is beneficial to mounting and sealing of the air conditioner.

The description shows that embodiments of the disclosure have the following technical effects.

According to the disclosure, as the platform main body of the air conditioner platform structure is of the frame structure spliced by the plurality of beam bodies, the structure of the air conditioner platform is simplified, lightening of the air conditioner platform is achieved, the platform main body is also prevented from the ponding phenomenon, and the problem that the air conditioner platform structure of a subway in the related art has large weight in the conventional art is solved.

The above is only one embodiment of the disclosure and not intended to limit the scope of protection of the disclosure. For those skilled in the art, the disclosure may have various modifications and variations within the scope of the claims.

## Claims

1. An air conditioner platform structure, comprising a platform main body (10) for mounting an air conditioner, wherein the platform main body (10) comprises a plurality of beam bodies, and the plurality of beam bodies are spliced in sequence in a circumferential direction along the platform main body (10) to form a frame structure for supporting the air conditioner; wherein the plurality of beam bodies comprise two mounting beams (20), the two mounting beams (20) are oppositely provided, and the two mounting beams (20) are used for supporting the air conditioner; the plurality of beam bodies further comprise an end beam (30), and the end beam (30) is provided between the two mounting beams (20); **characterised in that** the plurality of beam bodies comprise a waterproof plate (50) for forming a waterproof groove (51), and the waterproof plate (50) is provided on an inner side of the end beam (30).

2. The air conditioner platform structure as claimed in claim 1, wherein two end beams (30) are provided, and one end beam (30) in the two end beams (30) is connected to one end of each of the two mounting beams (20), the other end beam (30) is connected to the other end of the each of the two mounting beams (20).

3. The air conditioner platform structure as claimed in claim 2, wherein the plurality of beam bodies comprise a first reinforcing beam (40), and an outer side of at least one of the two end beams (30) has the first reinforcing beam (40).

4. The air conditioner platform structure as claimed in claim 3, wherein each of the two end beams (30) comprises a vertical plate part (31) and a transverse plate part (32) which are mutually connected, a part of beam body of the first reinforcing beam (40) is connected with the vertical plate part (31), and a part of beam body of the first reinforcing beam (40) is connected with the transverse plate part (32).

5. The air conditioner platform structure as claimed in claim 1, wherein the end beam (30) comprises a vertical plate part (31) and a transverse plate part (32) which are mutually connected, a baffle plate part (33) is provided on the transverse plate part (32), the baffle plate part (33) is provided parallel to the vertical plate part (31), the waterproof plate (50) is provided on the transverse plate part (32), and the waterproof groove (51) is surrounded by the waterproof plate (50), the transverse plate part (32) and the baffle plate part (33).

6. The air conditioner platform structure as claimed in claim 1, wherein the plurality of beam bodies further comprise two side beams (60), each of the two side beams (60) is provided on a corresponding mounting beam (20) of the two mounting beams (20), an extension direction of the each of the two side beams (60) is identical to an extension direction of the corresponding mounting beam (20), and a rectangular frame used for connecting with a vehicle body is surrounded by two end beams (30) and the two side beams (60).

7. The air conditioner platform structure as claimed in claim 6, wherein the plurality of beam bodies further comprise a second reinforcing beam (70), the second reinforcing beam (70) is provided on a side far away from a corresponding mounting beam in the two mounting beams (20), of each of the two side beams (60) , and an extension direction of the second reinforcing beam (70) is identical to an extension direction of the corresponding side beam (60).

8. A vehicle, comprising a vehicle body and an air conditioner platform structure provided on the vehicle body, wherein the air conditioner platform structure being the air conditioner platform structure as claimed in any one of claims 1-7.

## Patentansprüche

1. Klimatisierungsplattform, umfassend einen Plattformhauptkörper (10) zum Anbringen einer Klimaanlage, wobei der Plattformhauptkörper (10) eine Vielzahl von Trägerkörpern umfasst und die Vielzahl von Trägerkörpern der Reihe nach in Umfangsrichtung entlang des Plattformhauptkörpers (10) verbunden sind, um eine Rahmenstruktur zum Tragen der Klimaanlage zu bilden; wobei die Vielzahl von Trägerkörpern zwei Befestigungsträger (20) umfasst, die zwei Befestigungsträger (20) gegenüberliegend vorgesehen sind und die zwei Befestigungsträger (20) zum Tragen der Klimaanlage verwendet werden; die Vielzahl von Trägerkörpern ferner einen Endträger (30) umfasst und der Endträger (30) zwischen den zwei Befestigungsträgern (20) vorgesehen ist; **dadurch gekennzeichnet, dass** die Vielzahl von Trägerkörpern eine wasserdichte Platte (50) zum Bilden einer wasserdichten Nut (51) umfasst und die wasserdichte Platte (50) an einer Innenseite des Endträgers (30) vorgesehen ist.

2. Klimatisierungsplattform nach Anspruch 1, wobei zwei Endträger (30) vorgesehen sind und ein Endträger (30) von den beiden Endträgern (30) mit einem Ende jedes der beiden Befestigungsträger (20) verbunden ist, wobei der andere Endträger (30) mit dem anderen Ende jedes der beiden Befestigungsträger (20) verbunden ist.

3. Klimatisierungsplattform nach Anspruch 2, wobei die Vielzahl von Trägerkörpern einen ersten Verstärkungsträger (40) umfasst und eine Außenseite von mindestens einem der beiden Endträger (30) den ersten Verstärkungsträger (40) aufweist.

4. Klimatisierungsplattform nach Anspruch 3, wobei jeder der beiden Endträger (30) einen vertikalen Plattenteil (31) und einen Querplattenteil (32) umfasst, die miteinander verbunden sind, wobei ein Teil des Trägerkörpers des ersten Verstärkungsträgers (40) mit dem vertikalen Plattenteil (31) verbunden ist und ein Teil des Trägerkörpers des ersten Verstärkungsträgers (40) mit dem Querplattenteil (32) verbunden ist.

5. Klimatisierungsplattform nach Anspruch 1, wobei der Endträger (30) einen vertikalen Plattenteil (31) und einen Querplattenteil (32) umfasst, die miteinander verbunden sind, wobei ein Prallplattenteil (33) an dem Querplattenteil (32) vorgesehen ist, der Prallplattenteil (33) parallel zum vertikalen Plattenteil (31) vorgesehen ist, die wasserdichte Platte (50) auf dem Querplattenteil (32) vorgesehen ist und die wasserdichte Nut (51) von der wasserdichten Platte (50), dem Querplattenteil (32) und dem Prallplattenteil (33) umgeben ist.

6. Klimatisierungsplattform nach Anspruch 1, wobei die Vielzahl von Trägerkörpern ferner zwei Seitenträger (60) umfasst, wobei jeder der beiden Seitenträger (60) an einem entsprechenden Befestigungsträger (20) der beiden Befestigungsträger (20) vorgesehen ist, eine Erstreckungsrichtung jedes der beiden Seitenträger (60) identisch mit einer Erstreckungsrichtung des entsprechenden Befestigungsträgers (20) ist und ein rechteckiger Rahmen, der zum Verbinden mit einer Fahrzeugkarosserie verwendet wird, von zwei Endträgern (30) und den beiden Seitenträgern (60) umgeben ist.

7. Klimatisierungsplattform nach Anspruch 6, wobei die Vielzahl von Trägerkörpern ferner einen zweiten Verstärkungsträger (70) umfasst, wobei der zweite Verstärkungsträger (70) auf einer Seite weit entfernt von einem entsprechenden Befestigungsträger in den beiden Befestigungsträgern (20) jedes der beiden Seitenträger (60) vorgesehen ist und eine Erstreckungsrichtung des zweiten Verstärkungsträgers (70) identisch mit einer Erstreckungsrichtung des entsprechenden Seitenträgers (60) ist.

8. Fahrzeug, umfassend eine Fahrzeugkarosserie und eine an der Fahrzeugkarosserie vorgesehene Klimatisierungsplattform, wobei die Klimatisierungsplattform die Klimatisierungsplattform nach einem der Ansprüche 1-7 ist.

## Revendications

1. Structure de plateforme de climatiseur, comprenant un corps principal de plateforme (10) pour le montage d'un climatiseur, dans laquelle le corps principal de plateforme (10) comprend une pluralité de corps de poutre et la pluralité de corps de poutre sont joints en séquence dans une direction circonférentielle le long du corps principal de plateforme (10) pour former une structure de cadre pour supporter le climatiseur ; dans laquelle la pluralité de corps de poutre comprend deux poutres de montage (20), les deux poutres de montage (20) sont prévues de manière opposée et les deux poutres de montage (20) sont utilisées pour supporter le climatiseur ; la pluralité de corps de poutre comprend en outre une poutre d'extrémité (30) et la poutre d'extrémité (30) est prévue entre les deux poutres de montage (20) ; **caractérisée en ce que** la pluralité de corps de poutre comprend une plaque étanche (50) pour former une rainure étanche (51) et la plaque étanche (50) est prévue sur un côté intérieur de la poutre d'extrémité (30).

2. Structure de plateforme de climatiseur selon la revendication 1, dans laquelle deux poutres d'extrémité (30) sont prévues et une poutre d'extrémité (30) dans les deux poutres d'extrémité (30) est reliée à une extrémité de chacune des deux poutres de montage (20), l'autre poutre d'extrémité (30) est reliée à l'autre extrémité de chacune des deux poutres de montage (20).

3. Structure de plateforme de climatiseur selon la revendication 2, dans laquelle la pluralité de corps de poutre comprend une première poutre de renfort (40) et un côté extérieur d'au moins l'une des deux poutres d'extrémité (30) a la première poutre de renfort (40).

4. Structure de plateforme de climatiseur selon la revendication 3, dans laquelle chacune des deux poutres d'extrémité (30) comprend une partie de plaque verticale (31) et une partie de plaque transversale (32) qui sont mutuellement reliées, une partie du corps de poutre de la première poutre de renfort (40) est reliée à la partie de plaque verticale (31) et une partie de corps de poutre de la première poutre de renfort (40) est reliée à la partie de plaque transversale (32).

5. Structure de plateforme de climatiseur selon la revendication 1, dans laquelle la poutre d'extrémité (30) comprend une partie de plaque verticale (31) et une partie de plaque transversale (32) qui sont mutuellement reliées, une partie de plaque déflectrice (33) est prévue sur la partie de plaque transversale (32), la partie de plaque déflectrice (33) est prévue parallèlement à la partie de plaque verticale (31), la plaque étanche (50) est prévue sur la partie de plaque transversale (32) et la rainure étanche (51) est entourée par la plaque étanche (50), la partie de plaque transversale (32) et la partie de plaque déflectrice (33).

6. Structure de plateforme de climatiseur selon la revendication 1, dans laquelle la pluralité de corps de poutre comprend en outre deux poutres latérales (60), chacune des deux poutres latérales (60) est prévue sur une poutre de montage correspondante (20) des deux poutres de montage (20), une direction d'extension de chacune des deux poutres latérales (60) est identique à une direction d'extension de la poutre de montage correspondante (20) et un cadre rectangulaire utilisé pour la liaison avec une carrosserie de véhicule est entouré de deux poutres d'extrémité (30) et des deux poutres latérales (60).

7. Structure de plateforme de climatiseur selon la revendication 6, dans laquelle la pluralité de corps de poutre comprend en outre une deuxième poutre de renfort (70), la deuxième poutre de renfort (70) est prévue sur un côté éloigné d'une poutre de montage correspondante dans les deux poutres de montage (20), de chacune des deux poutres latérales (60), et une direction d'extension de la deuxième poutre de renfort (70) est identique à une direction d'extension de la poutre latérale correspondante (60).

8. Véhicule comprenant une carrosserie de véhicule et une structure de plateforme de climatiseur prévue sur la carrosserie de véhicule, dans lequel la structure de plateforme de climatiseur est la structure de plateforme de climatiseur selon l'une quelconque des revendications 1 à 7.
